# FASCICULE DE BREVET EUROPEEN

(11) **EP 1 989 484 B1**
(45) Date de publication et mention de la délivrance du brevet: **23.05.2012**
(21) Numéro de dépôt: 07731672.7
(22) Date de dépôt: 28.02.2007
(51) Int. Cl.: F23G 5/30, F23G 7/10

(54) **PROCEDE ET DISPOSITIF DE GENERATION EN CONTINU DE GAZ CHAUD NOTAMMENT POUR LA DESHYDRATATION DE VEGETAUX**
VERFAHREN UND VORRICHTUNG ZUR KONTINUIERLICHEN HEISSGASERZEUGUNG, IM BESONDEREN ZUR ENTWÄSSERUNG VON PFLANZENMATERIAL
METHOD AND DEVICE FOR CONTINUOUSLY GENERATING HOT GAS, ESPECIALLY FOR THE DEHYDRATION OF PLANT MATERIAL

(30) Priorité: 01.03.2006 FR 0650712
(43) Date de publication de la demande: 12.11.2008
(73) Titulaire: Ardi Finance, Societe par Actions Simplifiee, 51260 La Chapelle Lasson (FR)
(72) Inventeur: PETROVIC, Alexandre, F-78400 Chatou (FR); SINQUIN, Roger, F-75020 Paris (FR); BEC, Didier, F-51260 La Chapelle Lasson (FR)
(74) Mandataire: Rhein, Alain
(86) Numéro de dépôt international: PCT/FR2007/050855
(87) Numéro de publication internationale: WO 2007/099259

(56) Documents cités:
- EP-A- 1 063 469
- EP-A2- 0 776 962
- AU-B2- 517 419
- US-A- 4 312 702
- US-A- 4 646 637
- US-A1- 2003 110 994

## Description

L'invention concerne un procédé de génération en continu de gaz chaud notamment pour la déshydratation de végétaux.

Le domaine couvert par l'invention est celui de l'utilisation de sources d'énergie d'origine agricole, pour la transformation de produits agricoles, et notamment leur déshydratation, en particulier pour l'alimentation du bétail, l'alimentation humaine, et les éco-combustibles.

L'invention concerne encore un dispositif pour la mise en oeuvre de ce procédé.

La déshydratation de produits, particulièrement dans l'industrie agro-alimentaire (aliments de bétail tels que luzerne ou analogue, pulpe de sucreries, céréales, etc.), est couramment réalisée au moyen de sécheurs à gaz chaud, ce gaz étant produit par la combustion de gaz naturel ou de combustibles fossiles solides (charbon, lignite) ou liquides (produits pétroliers).

La substitution des combustibles traditionnels par l'énergie renouvelable, constituée par la biomasse (déchets végétaux, bois, récoltes énergétiques) représente aujourd'hui un enjeu majeur aussi bien au plan économique qu'à celui de la protection de l'environnement (lutte contre les émissions de gaz à effet de serre).

Le domaine du séchage dans le secteur agro-alimentaire est particulièrement concerné par cet enjeu, en raison d'une importante consommation spécifique de l'énergie, et des possibilités offertes par le large gisement potentiel que constitue la biomasse, qui est valorisable sous forme d'énergie thermique.

Différents procédés de gazéification de déchets végétaux sont connus depuis longtemps.

Le brevet US 4 646 637 décrit un réacteur à lit fluidisé comportant un système d'alimentation en fuel destiné à brûler dans le lit fluidisé, qu comporte une sole et des injecteurs d'air de fluidisation.

Le document de brevet australien AU 517 419 décrit un incinérateur d'ordures à basse pollution, comportant un réacteur à lit fluidisé. Il est alimenté en biomasse, sous forme d'ordures ménagères solides, par un convoyeur. Une sole perforée est traversée par des buses d'injection.

Aucun d'entre eux ne permet, néanmoins, de répondre à l'ensemble des objectifs technico-économiques visés par des installations concernées, qui sont principalement :
- la souplesse d'utilisation,
- la sécurité de fonctionnement,
- des performances thermiques et environnementales élevées,
- de bas coûts d'investissement et de maintenance.

De plus, la présence de gaz inflammables et/ou explosifs dans une installation de gazéification usuelle représente un risque qui est l'inconvénient majeur pour la plupart des procédés de pyrolyse et de gazéification.

Le but de l'invention proposée est de concilier ces objectifs, dans le cadre d'une installation sûre, optimisée et compacte, et de faciliter la conversion des installations de séchage existantes, telles que des séchoirs à tambour, alimentés en combustibles fossiles.

L'invention est relative à un procédé de gazéification de la biomasse, réalisé dans un réacteur à lit fluidisé, suivi de la combustion du gaz qui en résulte. Les fumées issues de cette combustion sont destinées en particulier au séchage direct, dans des sécheurs utilisant généralement du gaz naturel ou des combustibles fossiles comme énergie primaire.

A cet effet, l'invention concerne un procédé de génération en continu de gaz chaud notamment pour la déshydratation de végétaux, caractérisé par le fait qu'il consiste à utiliser la pyro-gazéification de biomasse en lit fluidisé aux parois refroidies et à réaliser les étapes suivantes :
- dosage de biomasse pour l'alimentation d'un lit fluidisé atmosphérique d'un réacteur de gazéification
- injection d'air de fluidisation sous ledit lit fluidisé
- pyrolyse de la biomasse sous l'effet de la température et de la turbulence du lit fluidisé,
- gazéification de la fraction carbonée solide de la biomasse subsistant après la pyrolyse dans ledit réacteur,
- maintien par échange thermique de la température optimale de réaction au sein dudit réacteur
- évacuation de l'énergie excédentaire au sein dudit réacteur par échange avec un fluide caloporteur
- envoi du gaz combustible issu de la gazéification de la biomasse vers le brûleur à gaz pauvre d'une chambre de combustion en contact avec de l'air de combustion injecté vers ce même brûleur
- génération de gaz chaud par combustion du gaz combustible.

L'invention utilise la technique du lit fluidisé, pour effectuer la transformation thermochimique des produits de biomasse tels que des excédents agricoles, afin de générer des gaz pauvres, dans un réacteur de gazéification. La combustion ultérieure de ces gaz pauvres permet de générer une quantité importante de produits de combustion chauds, aptes à tous types d'utilisation.

L'invention concerne encore un dispositif pour la mise en oeuvre de ce procédé, caractérisé par le fait qu'il comporte au moins un réacteur de gazéification à lit fluidisé, alimenté en biomasse au travers d'au moins un moyen de dosage, sur au moins une sole au travers de laquelle l'air de fluidisation est injecté au moyen d'injecteurs à soufflage à composante verticale et munis de buses conçues aptes à empêcher l'écoulement des particules constituant le lit fluidisé qu'il maintient en suspension.

Selon une caractéristique particulière, ce dispositif est caractérisé par le fait que l'énergie excédentaire issue de la réaction au sein du réacteur est communiquée à l'air de combustion, et à de l'air de dilution susceptible d'être amené à ladite chambre de combustion, par l'intermédiaire de moyens d'échange thermique, tels que des batteries de réchauffage.

Selon une autre caractéristique de l'invention, les parois et la sole dudit réacteurs sont constitués d'une double enveloppe parcourue par un fluide caloporteur.

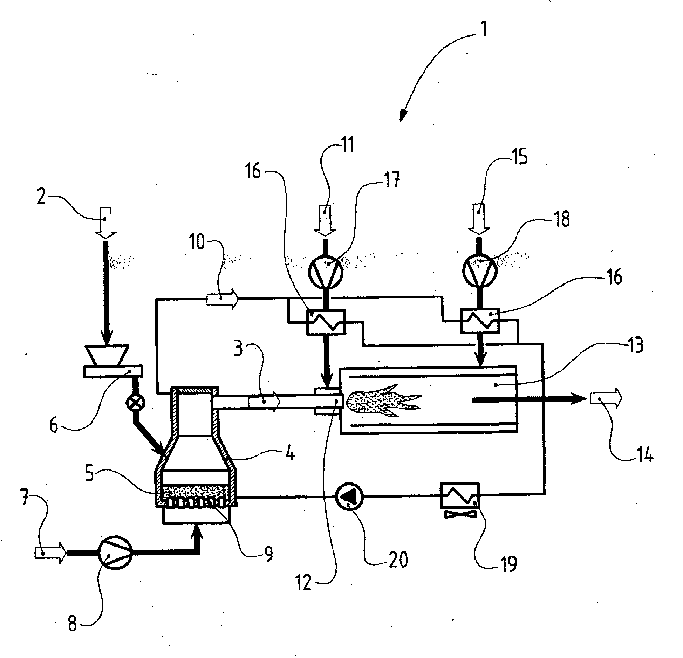

D'autres caractéristiques et avantages de l'invention ressortiront de la description détaillée qui va suivre des modes de réalisation non limitatifs de l'invention, dont l'un en référence à la figure unique annexée.

La figure unique représente, sous forme schématique, le dispositif de génération de gaz chaud 1 sur lequel on illustre les étapes du procédé selon l'invention.

Le procédé, tel que visible sur la figure unique, rassemble la gazéification d'une biomasse 2 et la combustion du gaz combustible 3 qui en résulte, les produits de combustion, étant ramenés ensuite, par dilution à la température requise au séchage (850 à 900°C environ, ou moins, selon le type de végétal à déshydrater).

La biomasse 2 peut être, tout particulièrement et dans une application préférée, constituée par des excédents agricoles, ou des végétaux cultivés sur des terres en jachère (qui représentent, dans l'Union Européenne, 10% des surfaces agricoles) et qui trouvent ainsi une valorisation qui ne contrevient pas à la législation en vigueur.

L'utilisation de la technique du lit fluidisé est connue dans différents domaines tels que la combustion du charbon et l'incinération des ordures ménagères.

Dans une démarche inventive, il a été conçu de l'appliquer à la transformation de la biomasse 2 en source d'énergie sous forme de gaz combustible 3.

La conversion de la biomasse 2 en gaz combustible 3 s'effectue, au sein du dispositif de génération de gaz chaud 1, dans un réacteur de pyro-gazéification 4 à lit fluidisé 5 atmosphérique.

Les produits constituant la biomasse 2 à gazéifier, d'une granulométrie comprise entre 1 et 50 mm environ dans une application préférée mais non limitative, sont introduits dans le réacteur 4, au moyen d'un dispositif de dosage volumétrique 6 et d'un sas, au dessus d'un lit fluidisé 5. Dans un exemple particulier, ces produits à gazéifier constituant la biomasse 2 peuvent être constitués de céréales telles que du blé, ou des déchets de bois.

La pyro-gazéification constitue la combinaison d'une réaction de pyrolyse, qui consiste à séparer la partie volatile et la partie carbonée de la biomasse 2, et d'une réaction de gazéification de cette même partie carbonée..

Sous l'effet de la température et de la turbulence du lit fluidisé 5, la biomasse 2 perd rapidement son humidité et ses substances volatiles, sous l'effet d'une réaction de pyrolyse. La fraction carbonée solide est ensuite également gazéifiée, avec de l'air de fluidisation 7. Celui-ci, injecté à l'aide d'un surpresseur 8 au travers d'une sole 9 située sous le lit fluidisé 5 du réacteur 4, assure, en premier lieu, le maintien en suspension de particules minérales constituant le lit fluidisé 5. Ces particules minérales sont des média de fluidisation, et sont avantageusement constituées par du sable, ou analogue.

La quantité d'air de fluidisation 7 est en relation directe avec celle requise pour la combustion du carbone résiduel, issu de la réaction de pyrolyse. Cette combustion assure l'apport calorifique nécessaire aux réactions endothermiques de gazéification.

Le maintien de la température optimale de réaction au sein du réacteur 4 est réalisé par un échange thermique avec un circuit de fluide caloporteur 10, préférentiellement de l'eau, de façon préférée au travers des parois du réacteur 4, constituant une double enveloppe. Cette disposition permet de faciliter le maintien de la température du lit fluidisé 5 dans une plage optimale pour la réaction de pyro-gazéification.

Le gaz combustible 3 issu de la chambre primaire que constitue le réacteur 4, constitué de matières volatiles combustibles, d'hydrocarbures lourds formés (goudrons), de produits de gazéification de la fraction carbonée solide et de particules fines entraînées, est mis en contact avec de l'air de combustion 11 comburant (air secondaire) dans un brûleur 12 à gaz pauvre, installé à l'entrée ou sur le fond d'une chambre de combustion et de dilution 13.

Des moyens de pilotage permettent d'ajuster les paramètres de manière à limiter les températures du gaz combustible 3 de façon à éviter la condensation entre la sortie du réacteur 4 et la chambre de combustion et de dilution 13.

La combustion dans cette chambre de combustion et de dilution 13 génère du gaz chaud 14, directement utilisable pour de la déshydratation ou tout autre usage, tel que du chauffage par exemple.

La protection du revêtement des parois de la chambre de combustion et de dilution 13 est assurée, soit par la circulation d'air de dilution 15 dans une double enveloppe, prévue à cet effet, soit par une protection avec des matériaux réfractaires conçus pour résister à une température de 1300°c, ces dispositions pouvant avantageusement être combinées.

L'énergie excédentaire issue de la réaction au sein du réacteur 4 est récupérée et réintroduite au circuit du gaz chaud, par l'intermédiaire de moyens d'échange thermique 16, tels que des batteries de réchauffage d'air de combustion 11 et/ou d'air de dilution 15, tel que visible sur la figure unique. L'air de combustion 11 est injecté sous l'effet de moyens de ventilation d'air comburant 17, tels qu'un ventilateur. L'air de dilution 15 est utilisé pour adapter la température d'utilisation, selon le type de végétal à déshydrater, et est injecté sous l'effet de moyens de ventilation 18 d'air de dilution, tels qu'un ventilateur.

La chaleur récupérée sur le circuit de fluide caloporteur 10 est entièrement recyclée pour des puissances au dessus de 50% de la charge nominale environ. En dessous de ce seuil, la réduction des débits d'air nécessite le recours à des moyens de réfrigération 19, tels qu'un réfrigérant atmosphérique, pour dissiper la quantité de chaleur non utilisée, avant le retour du fluide caloporteur 10 dans le réacteur 4. Le fluide caloporteur 10 est pompé, sur son circuit retour vers le réacteur 4, par une pompe de circulation 20.

Des moyens de pilotage et de régulation permettent de réguler :
- le dosage de la biomasse 2, au niveau du dispositif de dosage volumétrique 6,
- le débit d'air de fluidisation 7, au niveau du surpresseur 8,
- la température et le débit du fluide caloporteur 10, notamment au niveau de la pompe de circulation 20, des moyens de réfrigération 19, et des moyens d'échange thermique 16,
- la température du gaz de combustion 11, au niveau des moyens d'échange thermique 16
- la température de l'air de dilution 15, au niveau des moyens d'échange thermique 16
- le taux de dilution, constitué par le rapport entre l'air de dilution 15 et à l'air de combustion 11
- la température du gaz combustible 3, par combinaison des actions sur les paramètres précédents.

Un dispositif 1 mettant en oeuvre ce procédé peut fonctionner dans une plage comprise entre 25% et 100% de sa puissance nominale.

A titre d'exemple, une installation de puissance maximale de 18,6 MW, conçue pour générer du gaz chaud en entrée de sécheur à 900°C maximum, utilisant comme biomasse des grains de blé, est, dans ses conditions nominales, alimentée par 4270 kg de blé par heure, 3700 Nm3 d'air de fluidisation 7 par heure (soit 4784 kg par heure), 16500 Nm3 d'air de combustion 11 par heure (soit 21334 kg par heure), 25499 Nm3 d'air de dilution 15 par heure (soit 32971 kg par heure), et génère 49694 Nm3 de gaz chaud 14 par heure (soit 64164 kg par heure) à 900°C. Dans une telle installation, la température du lit fluidisé 5 est de l'ordre de 650°C, la température du gaz combustible 3 après refroidissement par échange thermique sur les parois du réacteur 4 est de l'ordre de 450°C ; la température dans la chambre de combustion et de dilution 13 serait de 1000°c sans dilution, et est réduite aux environs de 850°C à 900°C, ce qui constitue la température nécessaire pour une bonne application du procédé à la déshydratation de végétaux.

Le réacteur de gazéification 4 à lit fluidisé 5 atmosphérique utilisé, comporte, dans un mode de réalisation préféré, les dispositions suivantes:
- l'air de fluidisation 7 est injecté, au travers de la sole 9, en sortie d'un surpresseur 8 au moyen d'injecteurs, à soufflage à composante verticale, assurant une turbulence intense par l'effet de jets multiples,
- les injecteurs sont munis de plusieurs buses, dont la géométrie empêche, à l'arrêt, tout écoulement de particules minérales constituant le lit fluidisé 5, sans recours à des dispositifs complémentaires, du type siphon par exemple,
- les parois et la sole 9 du réacteur 4 sont constitués entièrement d'une double enveloppe parcourue par un fluide caloporteur, généralement de l'eau, dont la température ne dépasse pas 110°C.
- la sole 9 et la partie inférieure du réacteur 4 sont recouvertes d'un revêtement réfractaire de faible épaisseur, dont la conductibilité est choisie en fonction des caractéristiques du produit de biomasse 2 à gazéifier. Ce revêtement réfractaire, dans un mode préféré de de réalisation de l'invention, est constitué de produits à base de carbure de silicium.
- des moyens de pilotage gèrent la variation du débit de l'air de fluidisation 7, ce qui permet de maintenir la température du lit fluidisé 5 dans une plage optimale (préférentiellement de 550 à 650°C environ) pour la décomposition pyrolytique quasi instantanée de la biomasse 2 et une oxydation/gazéification en milieu réducteur, plus lente mais complète, de la fraction carbonée, issue de la pyrolyse.

Ces dispositions autorisent :
- des taux d'échanges thermiques et de matières très élevés,
- une faible inertie thermique,
- un encombrement réduit,

Les principaux avantages qui résultent de l'invention sont:
- la transformation intégrale de la biomasse 2 en gaz 3, utilisable comme combustible dans des sécheurs conventionnels, par exemple à tambour rotatif, qui peuvent ainsi être utilisés sans transformation coûteuse, notamment pour produire des aliments pour le bétail tels que de la luzerne, de la pulpe de betterave, ou encore des déchets de pulpe de sucrerie séchés. Ceci permet aux exploitants de tels sécheurs, dont les coûts d'énergie représentent 70 à 75% des coûts de production, de conserver les sécheurs existants, conçus pour fonctionner au gaz naturel, avec une simple adaptation de brûleur, sans être contraints de modifier fondamentalement leurs installations de chauffe, par exemple sous forme de fours à charbon coûteux et longs à amortir, en fonction des variations des coûts d'achat des matières premières énergétiques. L'utilisation d'excédents céréaliers comme le blé est particulièrement intéressante en raison du très faible taux de cendres (2%) évacuées par le lit fluidisé 5.
- le respect de la réglementation, en particulier européenne, qui interdit le recours aux énergies fossiles au-delà de 75%
- la facilité de gestion de l'installation, la quantité de gaz combustible 3 étant proportionnelle à l'envoi de produits de biomasse 2 sur le lit fluidisé 5
- le rendement énergétique très élevé, les pertes thermiques étant négligeables,
- un fonctionnement sûr, qui ne nécessite, en cas d'incident (coupure de courant, par exemple), ni groupe électrogène de secours, ni dispositif de mise à l'air libre. En effet, les quantités présentes dans l'appareil, de produits solides en réaction, ainsi que des gaz, sont extrêmement faibles. L'inertie thermique étant également limitée, une interruption de l'alimentation en combustible a comme conséquence un arrêt très rapide de la réaction et de la production du gaz 3. De ce fait, les risques liés à l'accumulation des solides chauds et surtout des gaz inflammables et/ou explosifs dans l'installation, se trouvent complètement éliminés. Il faut souligner que ce type de risque représente un inconvénient majeur pour la plupart des procédés de pyrolyse et de gazéification,
- la maîtrise des températures du circuit du gaz combustible 3, qui permet d'éviter tous les inconvénients liés aux conditions limites et notamment ceux dûs à la condensation des goudrons. Cet avantage distingue l'invention des systèmes à lit fluidisé de l'art antérieur, connus pour des effets néfastes de condensation à la sortie du réacteur.

## Revendications

1. Procédé de génération en continu de gaz chaud (14) notamment pour la déshydratation de végétaux, **caractérisé par le fait qu'**il consiste à utiliser la pyro-gazéification de biomasse (2) en lit fluidisé (5) aux parois refroidies, et à réaliser les étapes suivantes :
- dosage de biomasse (2) pour l'alimentation d'un lit fluidisé (5) atmosphérique d'un réacteur de gazéification (4)
- injection d'air de fluidisation (7) sous ledit lit fluidisé (5)
- pyrolyse de la biomasse (2) sous l'effet de la température et de la turbulence du lit fluidisé (5),
- gazéification de la fraction carbonée solide de la biomasse (2) subsistant après la pyrolyse dans ledit réacteur (4),
- maintien par échange thermique de la température optimale de réaction au sein dudit réacteur (4)
- évacuation de l'énergie excédentaire au sein dudit réacteur (4) par échange avec un fluide caloporteur (10)
- envoi du gaz combustible (3) issu de la gazéification de la biomasse (2) vers le brûleur (12) à gaz pauvre d'une chambre de combustion (13) en contact avec de l'air de combustion (11) injecté vers ce même brûleur (12)
- génération de gaz chaud (14) par combustion du gaz combustible (3).

2. Procédé selon la revendication précédente, **caractérisé par le fait qu'**il consiste à piloter le débit de l'air de fluidisation (7) de façon à maintenir la température du lit fluidisé (5) dans une plage optimale pour la décomposition pyrolytique quasi instantanée de la biomasse (2) et une oxydation/gazéification en milieu réducteur, plus lente mais complète, de la fraction carbonée, issue de la pyrolyse.

3. Procédé selon la revendication précédente, **caractérisé par le fait que** ladite plage optimale de températures est comprise entre 550°c et 650°c pour une biomasse (2) constituée de blé.

4. Procédé selon l'une des revendications précédentes, **caractérisé par le fait que** de l'air de dilution (15) est injecté dans ladite chambre de combustion (13).

5. Procédé selon l'une des revendications précédentes, **caractérisé par le fait qu'**on ajuste les paramètres de manière à limiter les températures du gaz combustible (3) de façon à éviter la condensation entre la sortie du réacteur (4) et la chambre de combustion et de dilution (13).

6. Dispositif de génération de gaz chaud (14), notamment pour la déshydratation de végétaux, par pyro-gazéification, comportant:
- au moins un moyen de dosage (6) d'alimentation en biomasse (2),
- au moins un réacteur de gazéification (4) à lit fluidisé (5) atmosphérique aux parois refroidies, conçu apte à la pyrolyse de la biomasse (2) sous l'effet de la température et de la turbulence dudit lit fluidisé (5), et à la gazéification de la partie carbonée solide de la biomasse (2) subsistant après séparation de la partie volatile de la biomasse (2) sous l'effet de la pyrolyse,
- des moyens de mise en turbulence dudit lit fluidisé, sous forme de moyens d'injection d'air de fluidisation (7) par le dessous d'au moins une sole (9) conçue apte à recevoir ledit lit fluidisé (5) au moyen d'injecteurs à soufflage à composante verticale et qui sont munis de buses conçues aptes à empêcher l'écoulement des particules constituant ledit lit fluidisé (5) que ledit air de fluidisation (7) maintient en suspension,
- des moyens de maintien par échange thermique de la température optimale de réaction au sein dudit réacteur (4)
- des moyens d'évacuation de l'énergie excédentaire au sein dudit réacteur (4) par échange avec un fluide caloporteur (10) **caractérisé par le fait qu'**il comporte en plus
- des moyens d'évacuation du gaz combustible (3) issu de la gazéification de la biomasse (2) vers au moins un brûleur (12) à gaz pauvre d'au moins une chambre de combustion (13) en contact avec de l'air de combustion (11) injecté vers ledit brûleur (12), pour la génération de gaz chaud (14) par combustion dudit gaz combustible (3).

7. Dispositif (1) selon la revendication 6, **caractérisé par le fait que** l'énergie excédentaire issue de la réaction au sein du réacteur (4) est communiquée à l'air de combustion (11), et à de l'air de dilution (15) susceptible d'être amené à ladite chambre de combustion (13), par l'intermédiaire de moyens d'échange thermique (16), tels que des batteries de réchauffage.

8. Dispositif (1) selon l'une des revendications 6 à 7, **caractérisé par le fait que** les parois et la sole (9) dudit réacteur (4) sont constitués entièrement d'une double enveloppe parcourue par un fluide caloporteur (10).

9. Dispositif (1) selon l'une des revendications 6 à 8, **caractérisé par le fait que** la partie inférieure du réacteur (4) et les parois de ladite chambre de combustion (13) sont conçues aptes à être protégées par une circulation de fluide caloporteur dans une double enveloppe, et que ladite sole (9), la partie inférieure dudit réacteur (4), et les parois de ladite chambre de combustion (13) sont recouvertes d'un revêtement réfractaire, de faible épaisseur, constitué de produits à base de carbure de silicium, dont la conductibilité est choisie en fonction des caractéristiques du produit de biomasse (2) à gazéifier.

10. Dispositif (1) selon l'une des revendications 6 à 9, **caractérisé par le fait qu'**il comporte des moyens de pilotage et de régulation du dosage de la biomasse (2), du débit d'air de fluidisation (7), de la température du fluide caloporteur (10), de la température du gaz combustible (3), de la température du gaz de combustion (11), de la température de l'air de dilution (15), et du taux de dilution.

## Claims

1. Method for continuously generating hot gas (14), in particular for the dehydration of plant material, wherein the method consists in using the pyro-gasification of biomass (2) on a fluidized bed (5) with cooled walls and in performing the following steps:
- dosing biomass (2) for feeding a fluidized bed (5) at atmospheric pressure of a gasification reactor (4),
- injection of fluidizing air (7) under said fluidized bed (5),
- pyrolysis of biomass (2) under the action of temperature and turbulence of the fluidized bed (5),
- gasification of the solid carbonaceous fraction of the biomass (2) remaining after pyrolysis in said reactor (4),
- maintaining by heat exchange of the optimum reaction temperature inside said reactor (4),
- evacuation of the excess energy within said reactor (4) by exchange with a heat carrying fluid (10),
- sending of the fuel gas (3) proceeding from the gasification of the biomass (2) to the lean gas burner (12) of a combustion chamber (13) in contact with the combustion air (11) injected into the same burner (12),
- generation of hot gas (14) by combustion of the fuel gas (3).

2. Method according to the preceding claim, wherein the method consists in controlling the flow rate of the fluidizing air (7) so as to maintain the temperature of the fluidized bed (5) within an optimum range for the almost instantaneous pyrolytic decomposition of the biomass (2) and an oxidation / gasification in a reducing medium, slower but complete, of the carbonaceous fraction proceeding from the pyrolysis.

3. Method according the preceding claim, wherein said optimum temperature range is between 550°C and 650°C for biomass (2) formed of wheat.

4. Method according to one of the preceding claims, wherein dilution air (15) is injected into said combustion chamber (13).

5. Method according to one of the preceding claims, wherein the parameters are adjusted so as to limit the temperatures of the fuel gas (3) in order to avoid the condensation between the outlet of the reactor (4) and the combustion and dilution chamber (13).

6. Device for generating hot gas (14), in particular for the dehydration of plant material, by pyro-gasification, including:
- at least one dosing means (6) for supplying biomass (2),
- at least one gasification reactor (4) with a fluidized bed (5) at atmospheric pressure with cooled walls, designed capable for the pyrolysis of biomass (2) under the action of temperature and turbulence of said fluidized bed (5), and gasification of the solid carbonaceous part of the biomass (2) remaining after separation of the volatile part of the biomass (2) under the action of the pyrolysis,
- means for putting said fluidized bed under turbulence, in the form of means for injecting fluidizing air (7) from below at least one sole (9) designed capable of receiving said fluidized bed (5) by means of blowing injectors with a vertical component, which are provided with nozzles designed capable of preventing the flow of the particles constituting said fluidized bed (5), which said fluidizing air (7) maintains in suspension,
- means for maintaining by heat exchange the optimum reaction temperature within said reactor (4),
- means for evacuating the excess of energy in said reactor (4) by exchange with a heat carrying fluid (10),
wherein the device further includes
- means for evacuating the fuel gas (3) proceeding from the gasification of the biomass (2) to at least one lean gas burner (12) of at least one combustion chamber (13) in contact with the combustion air (11) infected into said burner (12), for generating hot gas (14) by combustion of said fuel gas (3).

7. Device (1) according to claim 6, wherein the excess of energy proceeding from the reaction within the reactor (4) is communicated to the combustion air (11), and to the dilution air (15) likely to be brought to said combustion chamber (13), through heat exchange means (16), such as heating batteries.

8. Device (1) according to one of claims 6 to 7, wherein the walls and the sole (9) of said reactor (4) are made entirely of a double jacket through which passes a heat carrying fluid (10).

9. Device (1) according to one of claims 6 to 8, wherein the lower portion of the reactor (4) and the walls of said combustion chamber (13) are designed capable of being protected by a heat carrying fluid circulation in a double jacket, and said sole (9), the lower portion of said reactor (4) and the walls of said combustion chamber (13) are covered with a refractory coating of a small thickness formed of silicon carbide-based products, the conductivity of which is selected depending on the characteristics of the biomass product (2) to be gasified.

10. Device (1) according to one of claims 6 to 9, wherein the device includes means for controlling and regulating the dosing of the biomass (2), the flow rate of the fluidizing air (7), the temperature of heat carrying fluid (10), the temperature the fuel gas (3), the temperature of the combustion gas (11), the temperature of the dilution air (15) and the dilution rate.

## Patentansprüche

1. Verfahren zur kontinuierlichen Heißgaserzeugung (14), im besonderen zur Entwässerung von Pflanzenmaterial, **dadurch gekennzeichnet, dass** es darin besteht, die Pyrolyse und die Vergasung der Biomasse (2) in fluidisiertem Bett (5) mit abgekühlten Wänden anzuwenden und folgende Verfahrensschritte auszuführen:
- Dosieren der Biomasse (2) zum Zuführen in ein bei Normaldruck fluidisiertes Bett (5) eines Vergasungsreaktors (4),
- Einspritzen von Fluidisierungsluft (7) unterhalb des besagten fluidisierten Bettes (5),
- Pyrolyse der Biomasse (2) unter der Wirkung der Temperatur und der Turbulenz des fluidisierten Bettes (5),
- Vergasung des festen Kohlenstoffanteils der Biomasse (2), der nach der Pyrolyse in dem besagten Reaktor (4) verbleibt,
- Aufrechterhalten der optimalen Reaktionstemperatur innerhalb des besagten Reaktors (4) durch Wärmeaustausch,
- Anführung der überschüssigen Energie innerhalb des besagten Reaktors (4) durch Wärmeaustausch mit einem Kühlmittel (10),
- Zuführen des aus der Vergasung der Biomasse (2) herstammenden brennbaren Gases (3) zum Schwachgasbrenner (12) einer Verbrennungskammer (13) in Berührung mit in diesem selben Brenner (12) eingeblasenen Verbrennungsluft (11),
- Heißgaserzeugung (14) durch Verbrennung des brennbaren Gases (3).

2. Verfahren nach dem vorgehenden Anspruch, **dadurch gekennzeichnet, dass** es darin besteht, die Durchströmungsmenge der Fluidisierungsluft (7) derart zu steuern, um die Temperatur des fluidisierten Bettes (5) für die quasi augenblickliche pyrolytische Zersetzung der Biomasse (2) und eine langsamere, allerdings vollständige Oxydation/Vergasung in einer reduzierenden Atmosphäre des aus der Pyrolyse herstammenden Kohlenstoffanteils in einem optimalen Bereich aufrecht zu erhalten.

3. Verfahren nach dem vorgehenden Anspruch, **dadurch gekennzeichnet, dass** der besagte optimale Bereich der Temperaturen für eine Biomasse (2), die aus Weizen besteht, zwischen 550°C und 650°C liegt.

4. Verfahren nach einem der vorgehenden Ansprüche, **dadurch gekennzeichnet, dass** in die besagte Verbrennungskammer (13) Verdünnungsluft (15) eingeblasen wird.

5. Verfahren nach einem der vorgehenden Ansprüche, **dadurch gekennzeichnet, dass** die Parameter angepasst werden, derart, um die Temperaturen des brennbaren Gases (3) auf solche Art und Weise zu begrenzen, dass die Kondensierung zwischen dem Ausgang des Reaktors (4) und der Verbrennungs- und Verdünnungskammer (13) vermieden wird.

6. Vorrichtung zur Heißgaserzeugung (14), im besonderen zur Entwässerung von Pflanzenmaterial, durch Pyrolyse und Vergasung, umfassend:
- zumindest ein Mittel für die Dosierung (6) der Zuführung von Biomasse (2),
- zumindest einen Vergasungsreaktor (4) mit einem bei Normaldruck fluidisierten Bett (5) mit abgekühlten Wänden, geeignet vorgesehen für die Pyrolyse von Biomasse (2) unter der Wirkung der Temperatur und der Turbulenz des besagten fluidisierten Bettes (5), und für die Vergasung des festen Kohlenstoffanteils der Biomasse (2), der unter der Wirkung der Pyrolyse nach der Abscheidung des flüchtigen Anteils der Biomasse (2) verbleibt,
- Mittel zum Versetzen in Turbulenz des besagten fluidisierten Bettes in Form von Mitteln zur Injektion von Fluidisierungsluft (7) durch die Unterseite von zumindest einem Boden (9), der geeignet vorgesehen ist, um das besagte fluidisierte Bett (5) aufzunehmen, vermittelts Spritzdüsen mit senkrechter Komponente, und die mit Düsen ausgestattet sind, die geeignet vorgesehen sind, um den Abfluss der Partikel, die das besagte fluidisierte Bett (5) bilden, zu verhindern, damit die besagte Fluidisierungsluft (7) suspendiert bleibt,
- Mittel zur Aufrechterhaltung durch Wärmeaustausch der optimalen Reaktionstemperatur innerhalb des besagten Reaktors (4),
- Mittel zur Abfuhr der überschüssigen Energie innerhalb des besagten Reaktors (4) durch Wärmeaustausch mit einem Kühlmittel (10),
**dadurch gekennzeichnet, dass** sie außerdem
- Mittel zum Abführen des aus der Vergasung der Biomasse (2) herstammenden brennbaren Gases (3) zu mindestens einem Schwachgasbrenner (12) zumindest einer Verbrennungskammer (13) in Kontakt mit der Verbrennungsluft (11), die zu dem besagten Brenner (12) eingeblasen wird, zur Heißgaserzeugung (14) durch Verbrennung des besagten brennbaren Gases (3), umfasst.

7. Vorrichtung (1) nach Anspruch 6, **dadurch gekennzeichnet, dass** die überschüssige Energie, die bei der Reaktion innerhalb des Reaktors (4) entsteht, an die Verbrennungsluft (11) und an die Verdünnungsluft (15), geeignet, um der besagten Verbrennungskammer (13) zugeführt zu werden, mit Hilfe von Wärmeaustauschmitteln (16) wie Anwärmzellen weitergeleitet wird.

8. Vorrichtung (1) nach einem der Ansprüche 6 bis 7, **dadurch gekennzeichnet, dass** die Wände und der Boden (9) des besagten Reaktors (4) vollkommen durch einen Doppelmantel gebildet sind, der von einem flüssigen Kühlmittel (10) durchläuft wird.

9. Vorrichtung (1) nach einem der Ansprüche 6 bis 8, **dadurch gekennzeichnet, dass** der untere Bereich des Reaktors (4) und die Wände der besagten Verbrennungskammer (13) geeignet vorgesehen sind, um durch einen Umlauf eines Kühlmittels in einem Doppeltmantel geschützt zu werden, und dass der besagte Boden (9), der untere Bereich des besagten Reaktors (4) und die Wände der besagten Verbrennungskammer (13) mit einer feuerfesten Auskleidung geringerer Dicke bedeckt sind, die von Produkten auf Siliziumkarbid-Basis gebildet ist, deren Wärmeleitfähigkeit in Abhängigkeit von den Eigenschaften des zu vergasenden Biomasseproduktes (2) gewählt ist.

10. Vorrichtung (1) nach einem der Ansprüche 6 bis 9, **dadurch gekennzeichnet, dass** sie Mittel zur Steuerung und Regelung der Dosierung der Biomasse (2), der Strömungsmenge der Fluidisierungsluft (7), der Temperatur des Kühlmittels (10), der Temperatur des brennbaren Gases (3), der Temperatur des Verbrennungsgases (11), der Temperatur der Verdünnungsluft (15) und der Verdünnungsrate umfasst.
